Europäisches Patentamt

European Patent Office

Office européen des brevets

(11) Publication number: **0 203 562**
**B1**

# EUROPEAN PATENT SPECIFICATION

(45) Date of publication of patent specification: **28.02.90**

(51) Int. Cl.⁵: **G 11 B 20/18** // H03M13/00

(21) Application number: **86107136.3**

(22) Date of filing: **26.05.86**

(54) **An information recording and reproducing apparatus.**

(30) Priority: **27.05.85 JP 113621/85**

(43) Date of publication of application:
**03.12.86 Bulletin 86/49**

(45) Publication of the grant of the patent:
**28.02.90 Bulletin 90/09**

(84) Designated Contracting States:
**DE FR GB**

(56) References cited:
EP-A-0 073 519
WO-A-83/01533
WO-A-84/00628
WO-A-85/01382
GB-A-1 327 264
NL-A-8 402 617

PATENT ABSTRACTS OF JAPAN, vol. 8, no. 6
(P-247)1443r, 12 janvier 1984; & JP-A-58 169 306

PATENT ABSTRACTS OF JAPAN, vol. 6, no. 99
(E-111)977r, 8th June 1982; & JP-A-57 31 224

IBM TECHNICAL DISCLOSURE BULLETIN, vol.
27, no. 7B, December 1984, pages 4548-4549,
New York, US; A.J.BALL et al.: "Missing bit
detection in surface analysis testing"

(73) Proprietor: **Matsushita Electric Industrial Co.,
Ltd.**
**1006, Oaza Kadoma**
**Kadoma-shi Osaka-fu, 571 (JP)**

(72) Inventor: **Satoh, Isao**
**36-12, Narita-Higashigaoka**
**Neyagawa City, 572 (JP)**
Inventor: **Fukushima, Yoshihisa**
**C-508, 6-14, Sekime Johtoh-ku**
**Osaka City, 536 (JP)**
Inventor: **Ichinose, Makoto**
**4-3-303, Harayyamadai 1-cho**
**Sakai City, 590-01 (JP)**
Inventor: **Kuroki, Yuzuru**
**14-6-410, Minowa 2-chome**
**Toyonaka City, 560 (JP)**
Inventor: **Takagi, Yuji**
**3-14, Miyuki-Higashimachi**
**Neyagawa City, 572 (JP)**

(74) Representative: **Kirschner, Klaus Dieter et al**
**Patentanwälte Kirschner & Grosse Forstenrieder**
**Allee 59**
**D-8000 München 71 (DE)**

Courier Press, Leamington Spa, England.

## Description

This invention relates to an information recording and reproducing apparatus.

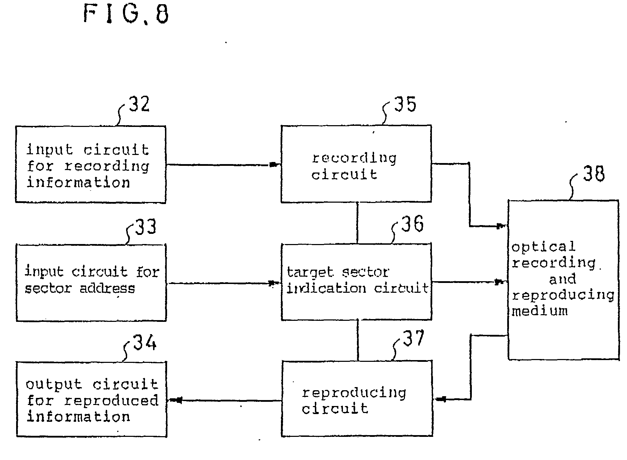

JP—A—60—226085 discloses an information recording and reproducing apparatus as shown in Fig. 8. In the recording operation, recording information is recorded on target sectors of an optical recording and reproducing medium 38 by a recording circuit 35. In reproducing operation, the recorded information on the target sectors is reproduced by a reproducing circuit 37.

The prior apparatus has such disadvantage that the reproducing error caused by detrioration of recording medium in a sector repeatedly recorded cannot be detected, and thus the reproducing error cannot be prevented. In the prior apparatus having exchangable recording medium, the deterioration of respective recording mediums differ to each other, and therefore prevention of the reproducing error is difficult.

From WO—A—83/01533 a three beam laser optical system comprising a writing beam and two reading beams is known. One of the reading beams is incident on the track ahead of the writing beams so as to serve as a read-before-write-beam, while the other reading beam is incident on the track behind the recording beam so as to serve as a read-after-write-beam. The read before write beam is used during the recording of the data to provide an advance indication as to whether there is previously recorded data ahead of the writing beam, in which case the recording operation is interrupted to prevent an overwrite error.

From the patent abstracts of Japan, volume 8, no. 6 (P—247) <1443>, January 12, 1984 a video tape recording device is known in which the number of detected errors is counted and compared with a predetermined number. In case the number of errors which is a specific counting value, a warning is given. This device is only directed to checking the state of video tape before storing data and information thereon.

It is the object of the present invention to provide an information recording and reproducing apparatus which can prevent error caused by deterioration of recording medium.

An information recording and reproducing apparatus according to the invention is characterized by the features of the main claim. Further advantages embodiments of the invention are characterized in subclaims.

## Brief Description of the Drawings

Fig. 1 is a block diagram of an information recording and reproducing apparatus in accordance with the present invention.

Figs. 2(a), 2(b) and 2(c) show sectors on recording medium.

Fig. 3 is a flow chart of an update operation.

Fig. 4 shows a code words.

Fig. 5(a) and 5(b) show eye patterns of reproduced signal.

Figs. 6(a), 6(b), 6(c) and 6(d) are time charts for showing marking operation.

Fig. 7 is a flow chart of an update operation.

Fig. 8 is a block diagram of a prior information recording and reproducing apparatus.

## DESCRIPTION OF THE PREFERRED EMBODIMENTS

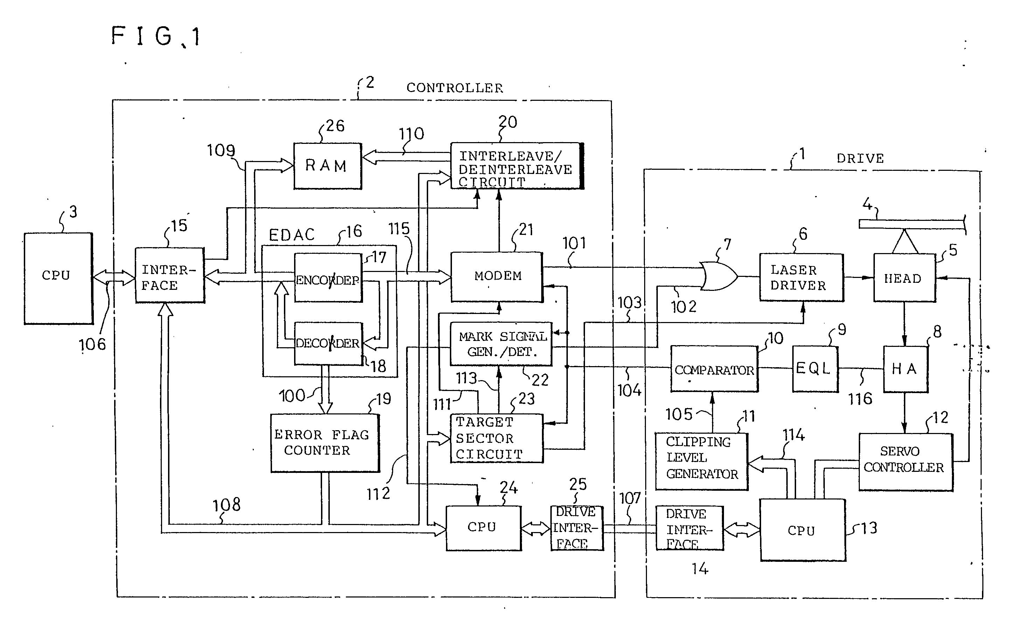

Fig. 1 is a block diagram of an information recording and reproducing apparatus in accordance with the present invention. In Fig. 1, numeral 1 designates a drive for recording and reproducing information on or from a reversible optical disk, numeral 2 designates a controller, numeral 3 designates a CPU for commanding the controller 2 and the drive 1 to record or reproduce information.

In the drive 1, numeral 5 designates an optical head for recording and reproducing on or from a reversible disk 4, numeral 6 designates a laser driver 6, numeral 7 designates an OR gate, numeral 8 designates a head amplifier for reproducing signal from the head 5, numeral 9 designates an equalizer for correcting distortion of reproducing signal, numeral 10 designates a comparator for making binary code signal from analog signal, numeral 11 designates a clipping level generator for changing the clipping level (threshold level) of the comparator 10, numeral 12 designates a servo controller, numeral 13 designates a CPU for controlling the drive 1, and numeral 14 designates a drive interface. A disk motor and linear motor for driving the disk 4 are not shown.

In the controller 2, numeral 15 designates system interface, numeral 16 designates Error Detection And Correction circuit (EDAC), numeral 17 designates an encoder for error correction signal, numeral 18 designates a decoder for error correction signal, numeral 19 designates an error flag counter, numeral 20 designates an interleave/deinterleave circuit for randomizing burst errors, numeral 21 designaters a dignital modulation/demodulation circuit (MFM (Modified frequency modulation), (2); (7) RLL (Run length limited code), or the like), numeral 22 designates a generator/detector for marking signal, numeral 23 designates a target sector circuit for detecting the target sector commanded by a CPU 24, numeral 25 designates a drive interface, and numeral 26 designates a RAM.

Numeral 101 designates a data line for writing, numeral 102 designates a line for marking signal, numeral 103 designates a line for erasing gate signal, numeral 104 designates a data line for reading, numeral 105 designates a line for clipping level signal, numeral 106 designates a system bus, numeral 107 designates an interface line for drive control, numeral 108 designates a bus for CPU, numeral 109 designates a bus for internal data, numeral 110 designates address lines for RAM, numeral 111 designates line for sector indicating signal, numeral 112 designates line for detecting signal of marking signal, numeral 113 designates line for trigger signal for marking signal, numeral 114 designates line for command signal of the clipping level, numeral 115 designates a bus for internal data, and numeral 116 designates line for reproducing signal.

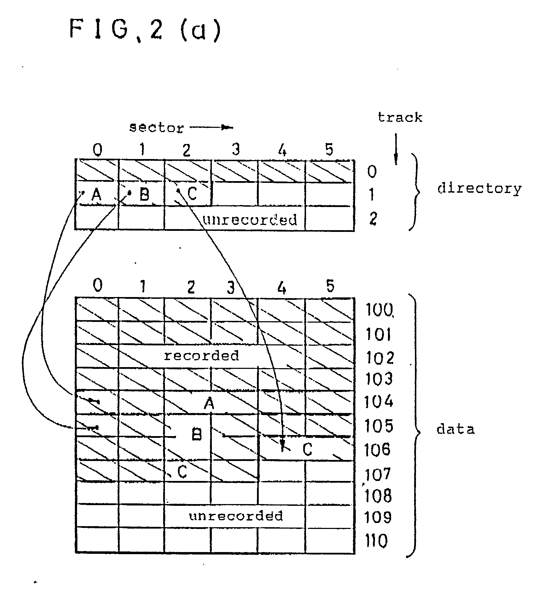

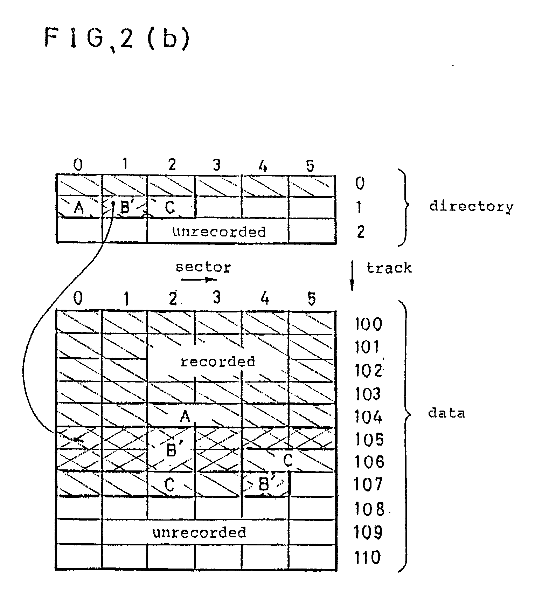

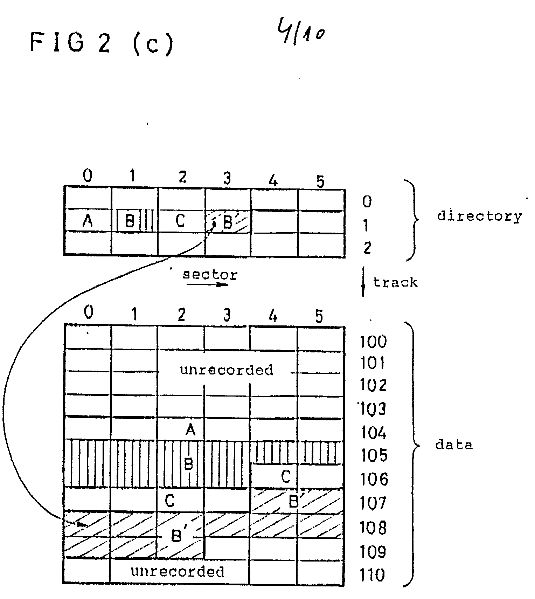

Fig. 2(a) shows sector on the reversible optical disk. In Fig. 2(a), the sectors are distinguished directory sectors (tracks 0 to 2) and data sectors (tracks 100 to 110). Each tracks having 6 sectors (from 0 to 5).

Sectors 0 to 5 of the track 104 are recorded as a file A, sector 0 of the track 105 to sector 3 of the track 106 are recorded as a file B, and sector 4 of the track 106 to sector 3 of the track 107 are recorded as a file C. The directories of the files A, B and C are recorded on sectors 0 to 2 of the track 1.

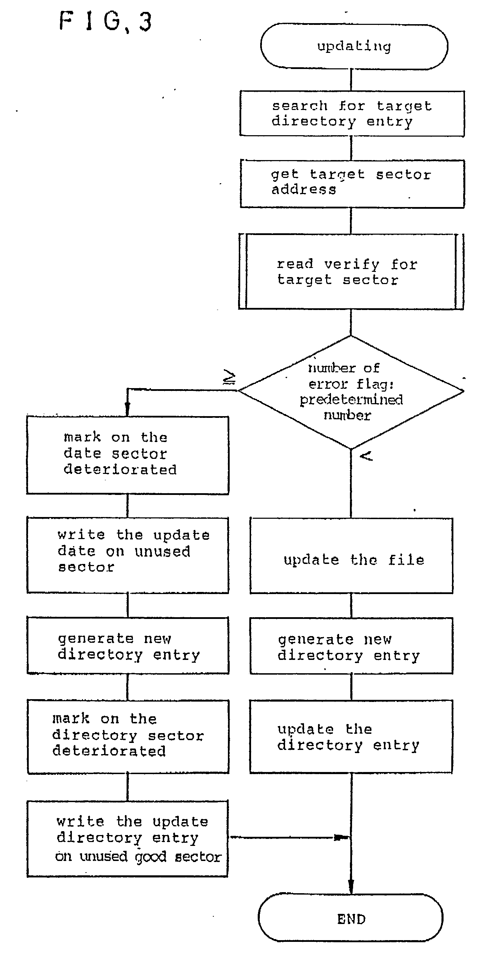

Referring to Figs. 2(a), 2(b), 2(c) and 3, updating operation is described.

(1) The CPU 3 searches the target directory entry of file B by reading the directories from the reversible disk 4, and get the target directory on the sector 1 of track 1.

(2) The CPU 3 commands to verify the sector of target directory entry by outputting the read verify command to the system bus 106.

(3) The CPU 24 of the controller 2 starts the read verify operation after clearing the error flag counter 19.

(4) The read verify operation is as follows:

(a) The controller 2 outputs a search command of the weight target track to the drive 1. In other words, the CPU 24 outputs track address signals on the line 107 through the drive interface 25. The CPU 13 of the drive 1 receives the track address signals and controls the servo controller for moving the head 5 on the target track. After confirming that the head 5 is moved on the target track, the drive 1 outputs the completion signal of seek to the controller 2.

(b) The controller 2 outputs a command for determining the clipping level to the drive 1. In the drive 1, the CPU 13 outputs a clipping level signal (digital signal) to the clipping level generator 11 which converts the digital signal of clipping level to the analog signal of clipping level. The comparator 10 converts the reproduced analog signals to the binary code signals in compliance with the clipping level. In the update operation, the clipping level is higher than that in the normal read operation, and hence a strict read verify operation is carried out in the update operation.

(c) The controller 2 sets the target track address and the target sector address to the target sector circuit. After finding the target sector, the target sector circuit 23 outputs a finding signal on the line 111. Then, the MODEM 21 starts digital demodulation. The head 5 converts optical signals reproduced from the reversible optical disk 4 to electrical analog signals. The electrical analog signals are amplified by the head amplifier 8 and are equalized by the equalizer 9. The equalized analog signals are converted to the digital signals by the comparator 10.

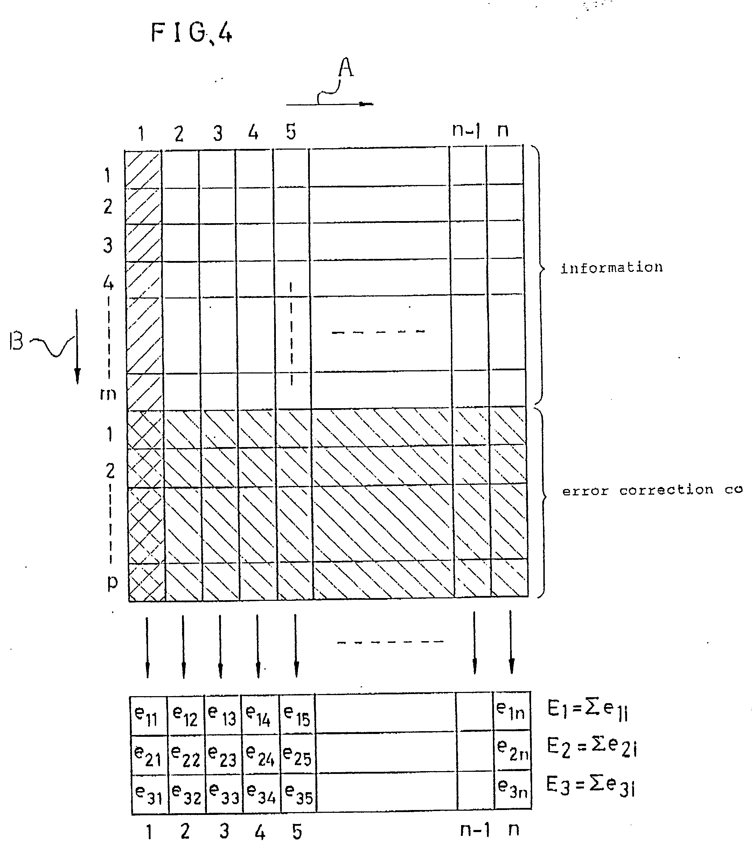

(d) The digital signals output on the line 104 are demodulated and the demodulated signals are output on the internal bus 115. The interleave/deinterleave circuit 20 is turned to interleave mode. The demodulated data are passed through the EDAC 16 (in this case the signals are merely passed through the EDAC 16), and are stored in the RAM 26. In the interleave mode, the data are stored in row 1 according to the row sequence at first, as shown by an arrow A in FIG. 4. Next, the data are stored in row 2 in the same sequence, so on. Each row is filled with the data in the column sequence, as shown by an arrow B in Fig. 4.

The CPU 24 detects an end of the demodulation and turn the interleave/deinterleave circuit 20 to the deinterleave mode. Then, the CPU 24 set the decoder 18 to work. In the deinterleave mode, the data are read from column 1 according to the column sequence at first, as shown by an arrow B. Next, the data are read from column 2, so on. Each column is read in the row sequence, as shown by an arrow A.

The decoder 18 generates the error correction code and detects and corrects the errors. The corrected data are stored in the RAM 26.

(e) The decoder 18 detects the kind of error (which is a single error, a double error, uncorrectable error or the like) and output the error signal to one of the lines 100 corresponding to the kind of error. The error flag counter 19 counts the error.

(f) The CPU 24 detects an end of the sector reading operation by detecting an end of decoding.

(g) Then, the CPU 24 checks whether the counted number of error is less than a predetermined number or not.

(5) The controller 2 informs a result of the check to the CPU 3.

(6) When good result is produced (the deterioration of the recording medium is assumed light), the CPU 3 commands the controller 2 and the drive 1 to write new data on sector 0 of the track 105 to sector 3 of the track 106 (10 sectors). Then the CPU 3 commands to write the new data on sector 4 of the track 107. Next, the CU 13 commands to update the directory entry (on track 1, sector 1). The update directory entry has information that file B' is constructed with 2 area, one is on sector 0 of the track 105 to sector 3 of track 106 and the other is on sector 4 of the track 107. By the above-mentioned operation, the file B is updated to the file B' (see Fig. 2(b)).

(7) When a bad result is produced (the deterioration of the recording medium is assumed large), the CPU 3 commands the controller 2 and the drive 1 to write a deterioration marking for showing particular deteriorated sector among the deteriorated sectors (in this case sector 0 of the track 105 to sector 3 of the track 106 and sector 1 of the track 1). Then the CPU 3 find out unused good sectors and commands to write file B' on the good sectors, i.e. sector 4 of the track 107 to sector 2 of the track 109. Next, the CPU 3 commands to write the updated directory entry (on track 1 sector 3). This updated directory entry has information file B' on sector 4 of the track 107 to sector 2 of the track 109. By the above-mentioned operation, the file B is updated to the file B' (see Fig. 2 (c)).

Although the data and directory in the above embodiment are updated after marking, in other embodiment the data and the directory may be updated before marking. In the latter case, the data can be recovered even in case where a breakdown takes place in the updating operation.

Next, the recording operation is described. The CPU 3 output the write command signal on the system bus 106. The write command signal has the write command code, the target track, the target sector and number of sectors to be recorded. The controller 2 receives the command signal by the system interface 15. The controller 2 commands the drive 1 to search the target sector. The controller 2 requests the CPU 3 to transfer the information to be recorded. The CPU 3 transfers the information to the RAM 26 through the interface 15 by direct memory access (DMA).

After completing the transfer of the information for one sector, the CPU 24 commands the encoder 17 to work and transfers the data stored in the RAM 26 to the encoder 17. The encoder 17 generates and ouputs the error collection signals. The CPU 24 stores the data added the error collection signals on the RAM 26. The data are stored in deinterleave mode.

After completing the encoding operation for one sector, the CPU 24 set the target track address and the target sector address to the target sector circuit 23. Further, the CPU 24 turns the MODEM 21 to the modulation mode and turns the interleave/deinterleave circuit 20 in the interleave mode.

The target sector circuit 23 asserts the line 111 for sector indicating signal. The data stored in the RAM 26 are output on the data line 101 for writing through the internal bus 109, EDAC 16 (in this case the signals are merely passed through the EDAC 16), the internal bus 115 and the MODEM 21. The data outputted on the line 101 drives the head 5.

Re-recording of the information on the sector is carried out by two steps, namely, erasing the target sectors and recording the information on the target sectors. The target sector circuit 23 outputs the sector detecting signal on the line 103 for erasing gate signal. By receiving the signal, the laser driver 6 and the head 5 operate in the erasing mode. The reversible optical disk 4 are annealed for erasing the recorded information.

Next, the laser driver 6 and the head 5 operate in the recording mode. Rapid-head parts on the reversible optical disk 4 are changed to amorphous state, corresponding to the data to be recorded.

Next, the reading operation is described. The reading operation is basically the same as the aforementioned read verify operation except that the clipping level of the comparator 10 is set to the normal level and that the decoded signals are transferred to the CPU 3 through the internal bus 109, the system interfaces 15 and the system bus 106.

Fig. 4 shows the information which is added with the error correction code (hereinafter a code-word). One code-word consists of m bits of the information and p bits of the error correction code. Number of the code-words are shown. Each code-words corresponds to the error flag counter 19. In this embodiment, the Reed Solomon Code is used as the error correction code. The error flag counter 19 counts the single error flag

$$(\text{number of single error flag is } E_1 = \Sigma e_{ij}),$$

double error flag

$$(\text{number of double error flag is } E_2 = \Sigma e_{2i})$$

and triple error flag

$$(\text{number of triple error flag is } E_3 = \Sigma e_{3i}).$$

It seems that the deterioration of the optical recording medium is caused by fatique, i.e. increase of the random error which deteriorates the S/N rate, increase of the burst error by destroying of the medium (which is caused by thermal stress on the wounded track). Therefore, for example, the detection standards of the deterioration by the numbers $E_1$, $E_2$ and $E_3$ of error flag is as follows.

(1) standard A:
To read-verify the recorded data under the condition of strict clipping level.
To judge the sector as good sector when $E_2$ and $E_3$ are equal to zero.
To judge the sector as deteriorated sector when either of $E_2$ or $E_3$ is not equal to 0.

(2) standard B:
To read-verify the recorded data under the condition of normal clipping level.
To judge the sector as good sector when $E_1$ is less than Ne (Ne is a constant number determined by deterioration mechanism of the medium) and $E_2$ and $E_3$ are equal to zero.
To judge the sector as deteriorated sector when $E_1$ is not less than Ne, $E_2$ not equal to zero or $E_3$ is not equal to zero.

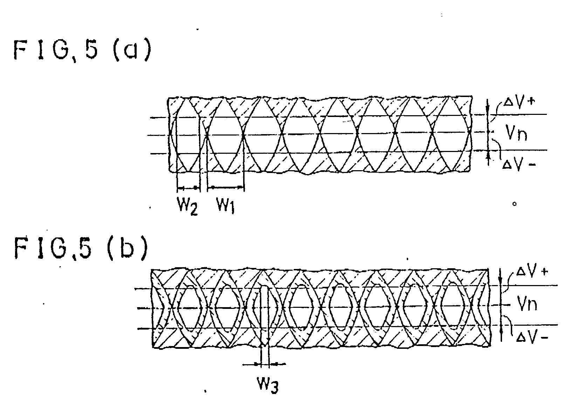

Figs. 5(a) and 5(b) show the eye-patterns as outputs of the equalizer 9 for the reversible optical disk. Fig. 5(a) shows the eye-pattern for the good sector. Fig. 5(b) shows the eye-pattern for the deteriorated sector.

In Fig. 5(a), Vn shows the normal clipping level and Vn ± ΔV show the strict clipping level. In the normal clipping level a detecting width is $W_1$, and in the strict clipping level a detecting width is $W_2$, $W_1$ and $W_2$ are sufficiently wide for correct detection.

On the contrary, in case of deteriorated sector, width $W_3$ at the strict clipping level is very narrow as shown in Fig. 5(b). It is because that the sector is deteriorated. Therefore, the enlargement of the burst error caused by defect of the medium can also be detected by shifting the clipping level.

Next, the marking operation for the deteriorated sector is described. In case of judging a sector as deteriorated sector, the CPU 3 commands the marking operation to the controller 2. By receiving the marking command, the controller 2 commands the drive 1 to seek the target track. After completing the seek, the controller 2 sets the target track signal and sector address to the target sector circuit 23. When the target sector circuit 23 detects the target sector, it asserts the liner 113 for marking trigger signal. By receiving the marking trigger signal, the marking signal generator/detector 22 generates the mark signal. The mark signal is inputted to the laser drive 6 through the OR gate 7. The head 5 records the marking signal to the target sectors being controlled by the laser driver 6.

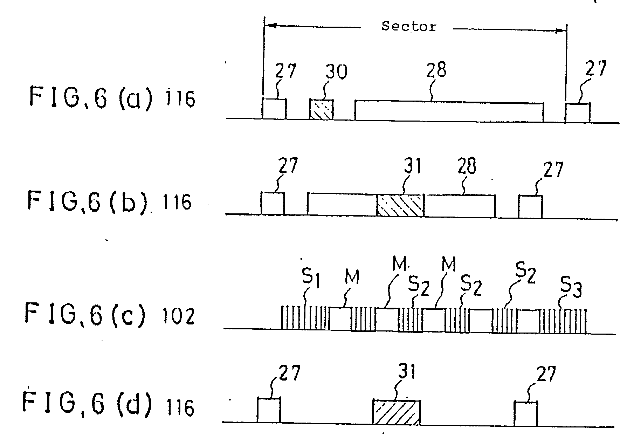

Figs. 6(a) to 6(d) is time charts for showing marking operation. Figs. 6(a), (b) and (c) show the reproduced signal on the line 116 from recording medium at the part near the marked sector. Numeral 27 designates sector identification part, numeral 28 designates data field of recording information, numerals 30 and 31 designate maked part. The marked part 30 is marked by flags and is positioned prior to the data field 28.

The marked part 31 is positioned in the data field 28. Fig. 6(c) shows the marking signal on the line 102. The marking signal has spacing parts $S_1$, $S_2$ and $S_3$ and marking parts M. In the marking part, the recorded data signals are re-recorded to a large dot than the interval of data dot. In the spacing part $S_1$, $S_2$ or $S_3$, a little part of the recorded data signals are re-recorded because the spacing parts has shorter dots than the interval of the data dot. Therefore, the spacing part can be easily distinguished from the marking part.

In other embodiment, the marking signal 31 may be recorded after erasing the data signals for easy detecting as shown in Fig. 6(d).

The marking parts 30, 31 are detected in the searching operation for target sector. In other words, on the read operation, the recorded marking signals are inputted to the generator/detector 22 for marking signal, and are detected. Therefore, the thruput of the system does not decrease.

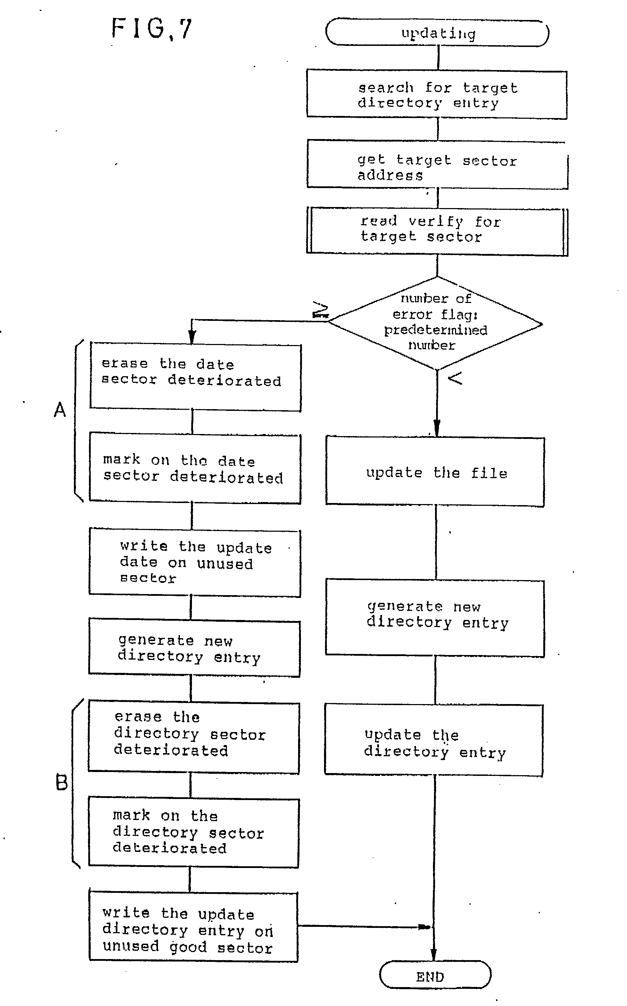

Fig. 7 is a flow chart for showing the update operation in case of using the marking signal shownin Fig. 6(d). In this embodiment, the basic steps are the same as those of the aforementioned embodiment shown in Fig. 3. The differences are that the deteriorated sectors are erased before the marking. In this embodiment, the marking signal can be easily detected.

As has been described in detail for various embodiments, the information recording and reproducing apparatus in accordance with the present invention can prevent from reproducing error caused by deterioration of recording medium, as a result of introducing the detecting means and the update control means. In the present invention, the recording medium can be used repeatedly to the limitation of deterioration without error.

## Claims

1. An information recording and reproducing apparatus comprising:
encoder means (17) for attaching an error-correction code to said information, recording means (21+7+6+5) for recording information attached with said error-corrections code in respective sectors on a recording medium, reproducing means (5+8+9+10+21) for reproducing information from respective sectors on said recording medium, error-correction means (18) for detecting and correcting errors, using said error-correction code, and generating an error-flag output upon each detected error, reproduction control means (10+11) for changing a condition of reading the signal reproduced by said reproducing means (5+8+9+10+21) in order to change the sensitivity for detects during defective sectors detecting, defective sector detection means (19+24) for detecting a defective sector by counting the number of error flat outputs (100) from said error-correction means (18) during reading under said changed conditions and comparing the counted number with a predetermined number, signal marking means (22+6+5) for issuing a signal for recording a defective sector mark (102) on each said defective sector at an updating, increase that the number of detected error flags is larger than said predetermined number, and update control means which instruct said recording means (21+7+6+5) to record an update directory after recording of update data on a target sector, in case that the number of detected error flag is smaller than a predetermined number, and to record an update director after recording of update data on a good other sector in case that the number of detected error flags is larger than said predetermined number.

2. Apparatus according to claim 1, wherein said defective sector detection means (19+24) reads out said defective sector prior to said updating.

3. Apparatus in accordance with claim 1 or 2, wherein said reproduction control means (10+11) changes its conditions of reading said signal to severer level than during ordinary readings, and makes the defective sector detection means (19+24) detect the defective sector under said severer level.

4. Apparatus in accordance with one of claims 1 to 3, wherein said recording means (21+7+6+5), before said updating, reads out an object sector storing a directory of a file to be updated, thereby to make said defective sector detection means (19+24) detect the degree of error, and, when the number of said errors in the information is equal to or smaller than said predetermined number, write the information to be updated.

5. Apparatus according to one of claims 1 to 4, wherein said marking operation is carried out after erasing the deteriorated sectors.

6. Apparatus according to one of claims 1 to 5, wherein said recording means (21+7+6+5), before said updating, reads out an object sector storing a directory of a file to be updated, thereby to make said detective sector detection means (19+24) detect the degree of error, and when the number of said errors in the information is above said predetermined number, first write the information contained in said directory to be updated in a fresh sector and subsequently write said detective sector mark (102) on each said defective sector.

## Patentansprüche

1. Anordnung zur Aufzeichnung und Wiedergabę von Informationnen, enthaltend:

Kodiereinrichtungen (17) zum Hinzufügen eines Fehlerkorrekturkodes an die Information, Aufzeichnungseinrichtungen (21+7+6+5) zum Aufzeichnen von mit dem Fehlerkorrekturkode versehenen Informationen in entsprechenden Sektoren auf einem Aufzeichnungsmedium, Wiedergabeeinrichtungen (5+8+9+10+21) zur Wiedergabe von Informationen von entsprechenden Abschnitten auf dem Aufzeichnungsmedium, Fehlerkorrektureinrichtungen (18) zum Erfassen und Korrigieren von Fehlern unter Verwendung des Fehlerkorrekturkodes und zum Erzeugen einer Fehleranzeige bei jedem gefundenen Fehler, Wiedergabesteuerungseinrichtungen (10+11) zum Verändern einer Bedingung für das Lesen des durch die Wiedergabeeinrichtung (5+8+9+19+21) wiedergegebenen Signals, um die Empfindlichkeit für Fehler weährend dem Abtasten von fehlerhaften Abschnitten zu verändern, Einrichtungen (19+24) zum Erfassen von fehlerhaften Sektoren zum Entdecken, indem ein fehlerhafter Sektor durch Zählen der Anzahl von Fehleranzeigen (100) der Fehlerkorrektureinrichtung (18) während des Lesens unter geänderten Bedingungen erfaßt und die gezählte Anzahl mit einem vorgebenen Wert verglichen wird, . Signalkennzeichnungseinrichtungen (22+6+5) zum Abgeben eines Signals zum Aufzeichnen eine Markierung (102) für einen fehlerhaften Sektor auf jedem fehlerhaften Sektor bei einem Updating, wenn die Anzahl der gefundenen Fehleranzeigen größer ist als der Vorgabewert, und Updatingsteuerungseinrichtungen, die die Aufzeichnungseinrichtungen (21+7+6+5) so steuern, daß sie nach der Aufzeichnung der Updatingdaten auf einem Zielsektor ein Updatingverzeichnis aufzeichnen, wenn die Anzahl der gefundenen Fehleranzeigen kleiner als ein Vorgabewert ist, und daß sie nach der Aufzeichnung der Updatingdaten auf einem guten anderen Sektor ein Updatingverzeichnis aufzeichnen, wenn die Anzahl der gefundenen Fehleranzeigen größer als der Vorgabewert ist.

2. Anordnung nach Anspruch 1, wobei die Einrichtung (19+24) zum Erfassen fehlerhafter Sektoren die fehlerhaften Abschnitte vor dem Updating ausliest.

3. Anordnung nach Anspruch 1 oder 2, wobei die Wiedergabesteuerungseinrichtung (10+22) ihre Bedingungen zum Lesen des Signals áuf eine empfindlichere Ebene als bei gewöhnlichen Lesevorgängen ändert und die Einrichtung (19+24) zum Erfassen fehlerhafter Sektoren den fehlerhaften Sektor bei dieser ermpfindlicheren Ebene findet.

4. Anordnung nach einem der Ansprüche 1 bis 3, wobei die Aufzeichnungseinrichtung (21+7+6+5) vor dem Updating einen das Verzeichnis einer upzudatenden Datei enthaltenden Zielsektor ausliest, um dadurch die Einrichtung (19+24) zum Auffinden fehlerhafter Sektoren zu veranlassen, das Ausmaß an Fehlern herauszufinden und, wenn die Anzahl der Fehler in der Information gleich oder kleiner als der Vorgabewert ist, die upzudatende Information zu schreiben.

5. Anordnung nach einem der Ansprüche 1 bis 4, wobei der Kennzeichnungsvorgang nach Auslöschen der zerstörten Sektoren durchgeführt wird. .

6. Anordnung nach einem der Ansprüche 1 bis 5, wobei die Aufzeichnungseinrichtung (21+7+6+5) vor dem Updating einen das Verzeichnis einer upzudatenden Datei enthaltenden Zielabschnitt ausliest, um dadurch die Einrichtung (19+24) zum Efasen fehlerhafter Sektoren zu veranlassen, das Ausmaß an Fehlern herauszufinden und, wenn die Anzahl der Fehler in der Information über dem Vorgabewert liegt, zuerst die in dem upzudatenden Verzeichnis enthaltene Information in einen frischen Sektor zu schreiben und danach die Kennzeichnung (102) für den fehlerhaften Sektor auf jeden fehlerhaften Sektor zu schreiben.

## Revendications

1. Appareil d'enregistrement et de reproduction d'une information comprenant:

un moyen de codeur (17) pour lier un code de correction d'erreur à ladite information, un moyen d'enregistrement (21+7+6+5) pour enregistrer une information liée au code de correction d'erreur dans des secteurs respectifs d'un support d'enregistrement, un moyen de reproduction (5+8+9+10+21) pour reproduire une information à partir de secteurs respectifs du support d'enregistrement, un moyen (18) de correction d'erreur pour détecter et corriger des erreurs, utilisant le code de correction d'erreur, et produire une sortie à drapeau d'erreur lors de chaque erreur détectée, un moyen (10+11) de commande de reproduction pour changer un état de lecture du signal reproduit par le moyen de reproduction (5+8+9+10+21) de manière à modifier la sensibilité aux défauts pendant la détection de secteurs défectueux, un moyen (19+24) de détection de secteur défectueux afin de détecter un secteur défectueux en comptant le nombre des sorties (100) à drapeau d'erreur provenant du moyen (18) de correction d'erreur lors d'une lecture sous des conditions changées et de comparer le nombre compté à un nombre prédéterminé, un moyen (22+6+5) de marquage par signal pour émettre un signal afin d'enregistrer un repère (102) de secteur défectueux sur chaque secteur défectueux lors d'une mise à jour, dans le cas où le nombre des drapeaux d'erreur détectée est supérieur au nombre prédéterminé, et un moyen de commande de mise à jour qui donne comme instruction au moyen d'enregistrement (21+7+6+5) d'enregistrer un répertoire de mise à jour après enregistrement des données de mise à jour sur un secteurcible, dans le cas où le nomber des drapeaux d'erreur détectée est inférieur à un nombre prédéterminé, et pour enregistrer un répertoire de mise à jour après enregistrement des données de mise à jour sur un autre bon secteur dans le cas où le nombre des drapeaux d'erreur détectée est supérieur au nombre prédéterminé.

2. Appareil selon la revendication 1, dans lequel le moyen (19+24) de détection de secteur défectueux lit le secteur défectueux avant la mise à jour.

3. Appareil seon la revendicaton 1 ou 2, dans lequel le moyen (10+11) de commande de la reproduction change son état de lecture dudit signal à un niveau plus sévère que lors de lectures ordinaires, et fait détecter par le moyen (19+24) de détection de secteur défectueux, le secteur défectueux sous le niveau plus sévère.

4. Appareil selon l'une des revendications 1 a 3, dans lequel le moyen d'enregistrement (21+7+6+5), avant la mise à jour, lit un secteur objet stockant un répertoire d'un fichier à mettre à jour, d'où il résulte que le moyen (19+24) de détection de secteur défectueux procède à a détection du degré d'erreur, et, lorsque le nombre des erreurs dans l'information est égal ou inférieur au nombre prédéterminé, écrit l'information à mettre à jour.

5. Appareil selon l'une des revendications 1 à 4, dans lequel l'opération de marquage est effectuée après effacement des secteurs détériorés.

6. Appareil selon l'une des revendications 1 à 5, dans lequel le moyen d'enregistrement (21+7+6+5), avant la mise à jour, lit un secteur objet stockant un répertoire d'un fichier à mettre à jour, d'où il résulte que le moyen (19+24) de détection de secteur défectueux procède à la détection du degré d'erreur, et lorsque le nombre des erreurs dans l'information est supérieur au nombre prédéterminé, écrit d'abord l'information contenue dans le répertoire à mettre à jour dans un secteur frais et ensuite écrit le repère (102) de secteur défectueux sur chaque secteur défectueux.

FIG.1

CONTROLLER 2

DRIVE 1

EP 0 203 562 B1

CPU 3

INTERFACE 15

RAM 26

INTERLEAVE/ DEINTERLEAVE CIRCUIT 20

EDAC 16

ENCODER 17

DECODER 18

ERROR FLAG COUNTER 19

MODEM 21

MARK SIGNAL GEN./DET. 22

TARGET SECTOR CIRCUIT 23

CPU 24

DRIVE INTER-FACE 25

DRIVE INTER-FACE

CPU 13

LASER DRIVER 6

HEAD 5

EQL 9

HA 8

COMPARATOR 10

CLIPPING LEVEL GENERATOR 11

SERVO CONTROLLER 12

4

7

14

106
109
110
115
101
102
103
104
105
107
108
100
111
112
113
114
116

# FIG, 2 (a)

# F I G. 2 (b)

# FIG 2 (c)

4/10

directory

sector →

track

data

unrecorded

A

B

C

C

B′

B′

unrecorded

# F I G, 3

**updating**

search for target directory entry

get target sector address

read verify for target sector

number of error flag: predetermined number

≧

<

mark on the date sector deteriorated

write the update date on unused sector

generate new directory entry

mark on the directory sector deteriorated

write the update directory entry on unused good sector

update the file

generate new directory entry

update the directory entry

END

5

FIG. 4

$E_1 = \sum e_{1i}$

$E_2 = \sum e_{2i}$

$E_3 = \sum e_{3i}$

FIG, 5 (a)

FIG, 5 (b)

FIG.6 (a) 116

Sector

27 30 28 27

FIG.6 (b) 116

27 31 28 27

FIG.6 (c) 102

$S_1$ M M $S_2$ M $S_2$ $S_2$ $S_3$

FIG.6 (d) 116

27 31 27

## FIG.7

```
                                    ( updating )
                                         |
                              +----------------------+
                              |  search for target   |
                              |   directory entry    |
                              +----------------------+
                                         |
                              +----------------------+
                              |  get target sector   |
                              |      address         |
                              +----------------------+
                                         |
                              +----------------------+
                              |  read verify for     |
                              |    target sector     |
                              +----------------------+
                                         |
                                        / \
                               ≥       /   \
                        +-------------< number of >
                        |              \ error flag: /
                        |               \ predetermined /
                        |                \  number    /
                        |                     \ /
                        |                      | <
                        v                      v
            +----------------------+  +----------------------+
        A  { |  erase the date     |  |   update the file    |
           { |  sector deteriorated|  +----------------------+
           { +----------------------+            |
           { |  mark on the date   |             |
           { |  sector deteriorated|             |
            +----------------------+             |
                        |             +----------------------+
            +----------------------+  |   generate new       |
            |  write the update    |  |   directory entry    |
            |  date on unused      |  +----------------------+
            |  sector              |            |
            +----------------------+            |
                        |             +----------------------+
            +----------------------+  |   update the         |
            |  generate new        |  |   directory entry    |
            |  directory entry     |  +----------------------+
            +----------------------+            |
                        |                       |
            +----------------------+            |
        B  { |  erase the          |            |
           { |  directory sector   |            |
           { |  deteriorated       |            |
           { +----------------------+           |
           { |  mark on the        |            |
           { |  directory sector   |            |
           { |  deteriorated       |            |
            +----------------------+            |
                        |                       |
            +----------------------+            |
            |  write the update    |            |
            |  directory entry on  |----------->|
            |  unused good sector  |            |
            +----------------------+            v
                                         ( END )
```

9

# FIG.8

```
  ┌──────────────┐                   ┌──────────────┐
  │ 32           │                   │ 35           │
  │ input circuit│                   │  recording   │
  │ for recording│─────────────────▶│   circuit    │──────┐
  │ information  │                   │              │      │
  └──────────────┘                   └──────────────┘      │    ┌──────────────┐
                                            │              │    │ 38           │
  ┌──────────────┐                   ┌──────────────┐      └───▶│  optical     │
  │ 33           │                   │ 36           │           │  recording   │
  │ input circuit│                   │ target sector│           │  and         │
  │ for          │─────────────────▶│ indication   │──────────▶│  reproducing │
  │ sector address│                  │ circuit      │           │  medium      │
  └──────────────┘                   └──────────────┘      ┌───▶│              │
                                            │              │    └──────────────┘
  ┌──────────────┐                   ┌──────────────┐      │
  │ 34           │                   │ 37           │      │
  │ output circuit│                  │ reproducing  │      │
  │ for reproduced│◀─────────────────│  circuit     │◀─────┘
  │ information  │                   │              │
  └──────────────┘                   └──────────────┘
```